# EUROPEAN PATENT SPECIFICATION

(11) **EP 0 521 270 B1**
(45) Date of publication and mention of the grant of the patent: **04.10.1995**
(21) Application number: 92107973.7
(22) Date of filing: 12.05.1992
(51) Int. Cl.: F16H 57/10, F16D 41/08, F16D 61/00

(54) **Four speed ratio transaxle having disengageable overrunning brake for reverse drive gearset reaction**
Viergangsgetriebe in queren Einbauweise mit ausrückbarer Freilaufbremse für den Rückwärtsgang
Transmission transversale à quatre vitesses avec freinage à roue-libre débrayable pour marche arrière

(30) Priority: 27.06.1991 US 722453
(43) Date of publication of application: 07.01.1993
(73) Proprietor: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Inventor: Pierce, Stanley Leroy, Northville, MI 48167 (US)
(74) Representative: Gauger, Hans-Peter, Dipl.-Ing.

(56) References cited:
- EP-A- 0 302 723
- EP-A- 0 302 723
- DE-A- 1 625 825
- US-A- 3 054 488
- US-A- 4 123 952
- US-A- 4 223 572
- US-A- 4 509 389

## Description

The present invention relates to a multiple speed ratio automatic transmission of the kind described in US-A-4,509,389 disclosing the features of the preamble of the claim.

The '389 patent discloses a hydrokinetic torque converter located on the axis of the crankshaft of an internal combustion engine and two simple planetary gear units mounted for rotation about the axis of a driven shaft, which extends parallel to the crankshaft axis and concentrically through the gearing. The torque output element of the torque converter, which is the turbine shaft of the bladed turbine, is connected driveably to the gearing by to a drive sprocket and a chain. Clutches and brakes are used to establish and disestablish four forward driving ratios as well as a reverse drive ratio.

A first overrunning coupling and a first friction clutch are used to establish a driving connection between an input sun gear of the gearing and the driven sprocket. A second overrunning coupling and a second friction clutch located in series relationship connect the sun gear to the driven sprocket. The first friction clutch and the second friction clutch each are provided with fluid pressure operated servos that comprise an annular cylinder and a cooperating annular piston, which define pressure chambers that rotate about the axis of the gearing. When the chambers are pressurized, the pistons engage friction discs to establish a driving connection between the outer race of the companion overrunning coupling and the common rotary portions of the clutch cylinders. Such friction discs also form a reverse brake means which is also servo operated by cylinder and piston means under the control of a hydraulic control system.

U.S. Patent US-A-3,054,488 describes an overrunning coupling that is engaged and released selectively to accommodate free-wheeling in either direction and to prevent relative rotation between the coupling races in one direction. Rollers are urged into clutching engagement with inner and outer races or into a clutch release position by fluid pressure.

Multiple-disc hydraulically actuated clutches or brakes, or double-wrap friction bands as currently used to provide a gearset reaction for reverse drive in automatic transmissions have inherent frictional drag losses that reduce driveline efficiency and impair fuel economy.

In a conventional friction brake, hydraulic drag losses are caused by rotation of friction discs through transmission fluid present in the brake and inertia required to rotate the discs during forward drive conditions while the brake is disengaged.

It is an object of this invention to provide an automatic transmission that eliminates operating losses associated with a clutch or brake that holds a gearset component against rotation while producing a reverse drive reaction.

The transmission of this invention as characterised by the claim realizes these objectives by providing a reverse drive gearset reaction on the transmission casing through a disengageable one-way brake that is engaged in reverse drive. During forward drive conditions the brake is disengaged by an actuation system that responds to a control system electrical output signal.

The one-way reverse reaction brake includes an inner cylindrical race and an outer race fixed to the casing. A set of angularly spaced rollers, located between the race and cam driveably connects the race to the casing when the race turns in its reverse drive direction. A roller cage, surrounding the inner race, holds the rollers in position, supports a compression spring biasing the rollers toward their engaged position, and defines surfaces adjacent the rollers. When the brake is to be disengaged, the cage is rotated such that the rollers are forced due to contact with the cage away from contact with the inner race and outer cam.

### BRIEF DESCRIPTION OF THE DRAWINGS

Figure 1 shows in schematic form torque delivery elements including planetary gearing for a preferred embodiment of our invention.

Figure 2 is a chart that shows the pattern of engagement and release of the clutches and brakes to establish the various forward driving ratios and the reverse ratio for the transmission mechanism of Figure 1.

Figures 3 and 4 are cross sections taken through a typical angular portion of a overrunning roller clutch used to produce a reverse drive gearset reaction.

Figure 5 is a top view of the cage assembly of Figures 3 and 4.

Figure 6A shows schematically the sensors, a microprocessor, its memory, output conditioning circuits and output signals for controlling the gear ratio changes of the transmission of Figure 1.

Figure 6B shows schematically a hydraulic valve body that actuates the friction elements that control operation of the transmission of Figure 1.

### DESCRIPTION OF THE PREFERRED EMBODIMENT

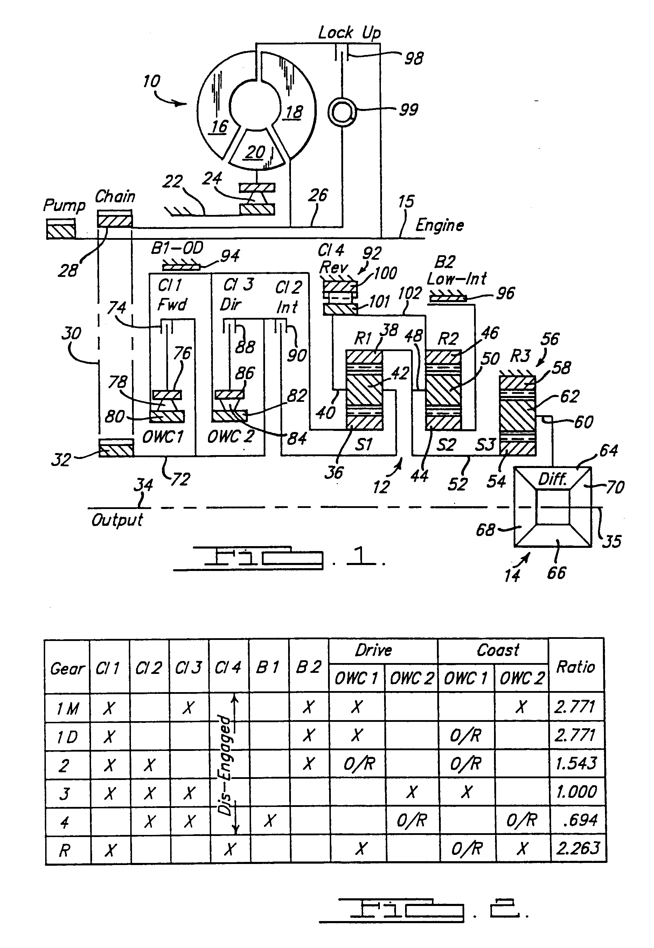

In Figure 1, numeral 10 designates a hydrokinetic torque converter. Numeral 12 designates a double planetary gear unit and numeral 14 designates a differential gear unit for transferring output torque from the gearing to the axle shafts 34,35.

The crankshaft of an internal combustion engine (not shown) has a crankshaft axis 15, which is connected to impeller 16 of the torque converter 10. A bladed turbine 18 and a bladed stator 20 together with the impeller 16 define a toroidal fluid flow circuit. The stator 20 is supported on a stationary stator sleeve shaft 22 and an overrunning brake 24 anchors the stator to the shaft 22 to prevent rotation of the stator 20 in a direction opposite to the direction of rotation of the impeller, although free-wheeling motion in the opposite direction is permitted.

Turbine 18 is connected to turbine sleeve shaft 26, which drives a torque input sprocket 28. The sprocket wheel 28 is part of a torque transfer drive that includes also drive chain 30 and driven sprocket wheel 32. Sprocket wheel 32 is mounted for rotation about torque input sleeve shaft 72, which is concentric with the axis of axle shaft 34.

Planetary gearing 12 includes two simple planetary gear units comprising a first gear unit having sun gear 36, ring gear 38, carrier 40 and planetary pinions 42 supported by carrier 40 in meshing engagement with sun gear 36 and ring gear 38. Gearing 12 includes also a second gear unit having a sun gear 44, a ring gear 46, carrier 48 and planet pinions 50 rotatably supported on carrier 48 in meshing engagement with sun gear 44 and ring gear 46. Carrier 40 is connected to ring gear 46, and ring gear 38 is connected to carrier 48 and to torque output shaft 52. Torque output shaft 52 is connected to sun gear 54 of final drive gearing, which includes a planetary gear unit 56 and the differential gear unit 14. Gear unit 56 includes, in addition to the sun gear 54, a fixed ring gear 58, a carrier 60 and planet pinions 62 rotatably supported on the carrier 60 in engagement with sun gear 54 and ring gear 58. Carrier 60 is connected to the carrier or spindle of the differential gearing 14. This differential gearing has differential pinions 64 and 66, which mesh with differential side gears 68 and 70. Side gear 68 is connected driveably to axle shaft 34, and side gear 70 is connected to axle shaft 35.

Driven sprocket 32 is connected to sleeve shaft 72, which extends to the input side of a forward drive friction clutch 74. This clutch carries also the symbols CL1. The output side of the clutch 74 is connected to the outer race 76 of an overrunning clutch 78, which carries also the symbol OWC1. The inner race 80 of the clutch 78 is connected to sun gear 36 and to the inner race 82 of a second overrunning clutch 84. Overrunning clutch 84 carries also the symbol OWC2.

The outer race 86 of the overrunning coupling 84 is connected to one side of friction clutch 88, which is engaged to establish direct drive. Clutch 88 carries also the symbol CL3. The other side of the clutch 88 is connected to the input side of friction clutch 90, which is engaged during intermediate speed operation. The other side of the clutch 90 is connected to the carrier 40.

Carrier 40 is adapted to be braked during reverse drive operation by a one-way or overrunning brake 92. This brake is a roller-type disengageable brake having an outer cam 100 secured to the transmission case and an inner race 101 secured to the overdrive-reverse carrier 102. It carries the symbol CL4.

Sun gear 36 is adapted to be braked during fourth speed ratio operation, an overdrive ratio, by a brake band 94, which surrounds a brake drum driveably connected to the overrunning coupling race 80 and sun gear 36. In Figure 1, brake band 94 carries also the symbol B1-OD.

Sun gear 44 is connected to a brake drum, adapted to be braked during low speed ratio operation, an intermediate speed ratio, by brake band 96. This brake band carries also the symbol B2. Both brake band 94 and brake band 96 are operated by fluid pressure operated brake servos, not shown.

The converter assembly includes a lockup clutch 98 located within the torque converter and impeller housing. The torque output side of the lockup clutch 98 has a damper 99 situated between the impeller and the turbine sleeve shaft 26 so that engagement of the lockup clutch will not be accompanied by harshness due to transitional torque fluctuations.

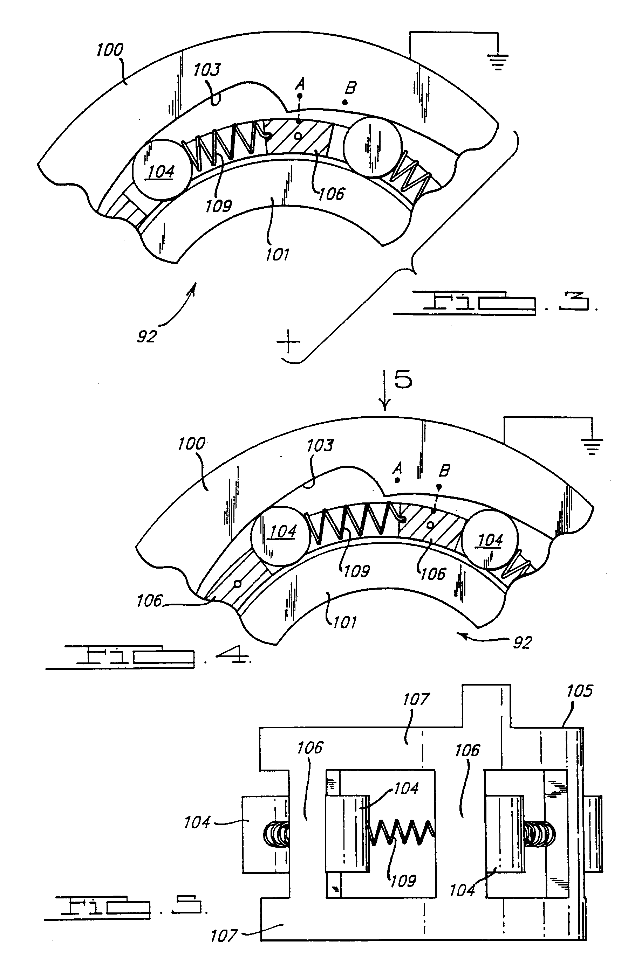

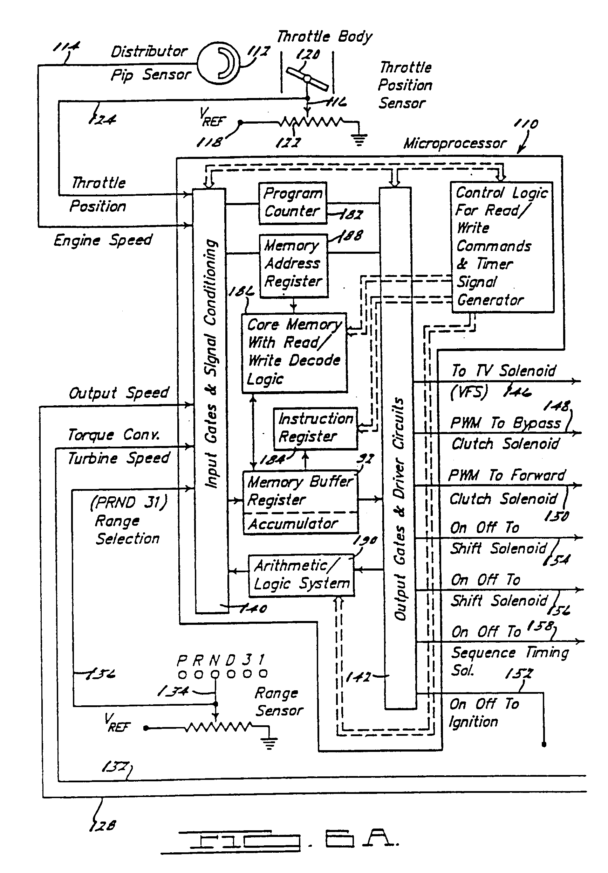

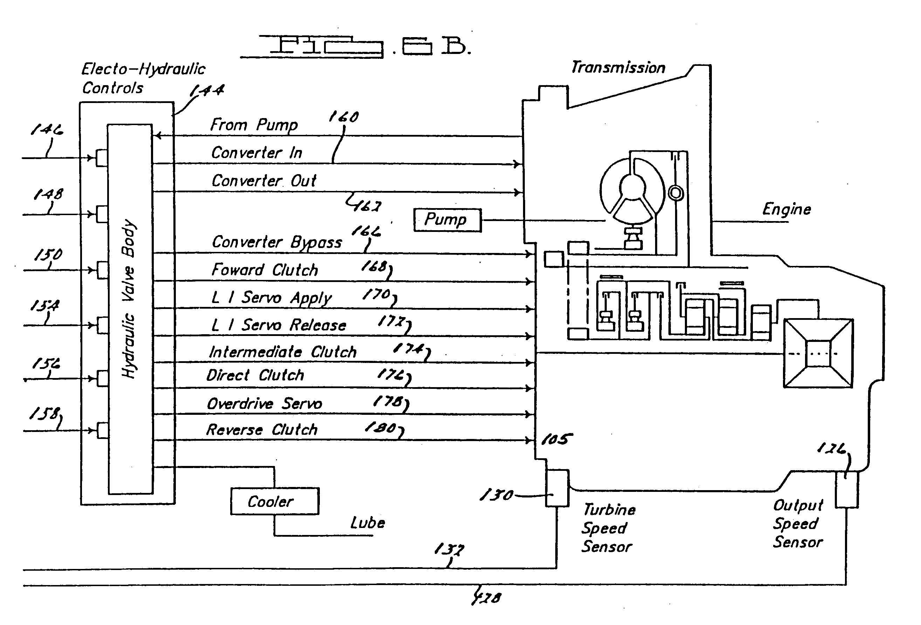

Figures 3 and 4 show the components of the disengageable one-way brake 92 in their engaged and disengaged positions, respectively. Outer race 100 has an inner surface 103 adapted for contact by rollers 104, several such rollers being mutually spaced angularly about the central longitudinal axis C of the brake. The inner race 101 has an outer cylindrical surface also adapted for contact with the rollers 104.

The rollers are held in position in a cage 105 having longitudinally directed fingers 106 mutually spaced about the axis of the brake. The fingers are joined together at their ends by hoop members 107. Compression springs 109, supported in each aperture and located between adjacent fingers, bias the rollers into contact with surface 103 and permit the rollers to separate from the cylindrical surface on inner race 101.

Surface 103 of outer race 102 is inclined radially such that when inner race 101 is rotating counterclockwise, as it does when the transmission produces reverse drive, it carries the rollers in that direction until the rollers contact and wedge between surfaces 103 and the outer surface of inner race 101, the position where the center O of each finger is aligned angularly with point A on the outer race 100, as shown in Figure 3. In that position, race 101 and race 100 are driveably connected mutually and brake 92 is engaged. Yet when the cage is pushed by the actuation system clockwise relative to the outer cam, thereby bringing the center O of each finger into angular alignment with point B on outer race 100 as shown in Figure 4, roller 104 moves up inclined surface 103 away from outer surface of inner race 101 until a clearance develops, inner race 101 is driveably disconnected from the outer race 100, and brake 92 is disengaged. The rollers are forced to the disengaged position by contact with an adjacent lateral surface of each finger.

Figure 2 shows a chart indicating the clutches and brakes that are engaged or released selectively to produce each of the various forward driving ratios and the reverse ratio. In the chart, the symbol X is used to identify an engaged clutch or brake, the symbol O/R is used to designate an overrunning condition for one or the other of the overrunning couplings 78 and 84, and a blank is used with respect to columns titled "OWC1" and "OWC2" to indicate a one-way clutch that is neither overrunning nor driving.

In operation, to establish the low speed ratio, clutch CL1 is applied as well as brake B2. Turbine torque then is transmitted through the transfer drive chain 30 to the sprocket 32 and through clutch 74 and overrunning coupling 78 to the sun gear 36. Sun gear 44 acts as a reaction point. An overall torque ratio then is developed which equals 2.771 as indicated in Figure 2. Under a coast condition with clutch CL3 also applied, overrunning coupling 78 overruns as coasting torque is delivered through the overrunning coupling 84 from sun gear 36 to sprocket wheel 32. The coasting condition is listed in the chart of Figure 2 as the first range 1M, i.e. first gear selected manually by the vehicle operator. The first speed drive ratio 1D indicates the automatically-engaged low speed ratio condition, which does not require engagement of clutch CL3.

To effect a ratio change to the intermediate ratio from the first speed drive ratio, it is necessary merely to engage one additional clutch clutch CL2, while brake B2 remains applied. Upon engagement of clutch CL2, torque from the sprocket 32 is delivered directly to ring gear 38 through the carrier 40. This produces a speed ratio of 1.543.

A ratio change from the intermediate ratio to third speed direct ratio is a synchronous shift that requires engagement of additional clutch CL3 and release of the brake B2 in timed relationship. Under these conditions, drive torque is delivered through overrunning coupling 84 from the sprocket 32 to sun gear 36. Since torque is delivered simultaneously to the sun gear 36 and the carrier 40, the elements of the planetary gear system are locked together for rotation in unison and the resulting speed ratio is 1.00.

The fourth speed ratio is an overdrive ratio. It is accomplished by fully applying brake B1 and thereafter releasing clutch CL1. The 3-4 shift is a nonsynchronous shift that is achieved merely by engaging the single friction element B1. The overrunning coupling 84 freewheels thus allowing this nonsynchronous shift to occur. The resulting speed ratio is 0.694.

Reverse drive is obtained by engaging clutch CL1 and engaging brake CL4. In order for the reverse reaction, i.e., the load applied to outer race 100 of brake CL4, to accept the reaction torque while there is no torsional load on the transmission, brake CL4 is engaged before clutch CL1 is engaged. After brake CL4 is engaged, a control and actuation system gradually engages clutch CL1 to modulate the load and avoid harshness and impact in shifting to reverse drive. When brake CL4 is engaged and clutch CL1 is disengaged, there is no torsional load on the transmission components but the reverse reaction at the transmission casing, where race 100 is fixed against rotation, is potentially available and readily operative following full engagement of clutch 74.

To disengage brake CL4, the cage is turned in the clockwise direction, as viewed in Figures 3 and 4, by the actuation system in response to control system output. The cage is actuated by a hydraulic servo or by an electric solenoid when an appropriate control output signal is present.

In reverse drive, sun gear 36 is driven from sprocket wheel 32 through coupling 78, and carrier 40 is held by brake 92. This action connects ring gear 38 to the final drive 56 with rotation in the reverse direction at a speed ratio of 2.263. In reverse coast conditions, coupling 78 overruns, but coupling 84 driveably connects sun gear 36 to sprocket 32.

If a friction brake were used instead of disengageable one-way brake 92, parasitic drag torque in the form of an additional torsion load on the transmission would be present throughout all of the forward drive conditions, i.e., when the brake is disengaged. Use of disengageable brake 92 eliminates the drag loss and thereby improves fuel efficiency overall.

The pattern for engagement and release for the overrunning couplings is indicated in the chart of Figure 2 for both the drive and coast conditions. Figure 2 also shows the ratios that are characteristic of each of the drive modes.

The planetary gear unit 56 of the final drive gearing has a carrier that is connected to a differential carrier 60 of differential gear unit 14. Carrier 60 is journalled in a bearing. Output side gear 70 of the differential gear unit 14 is splined to output shaft 35, which in turn is connected at its outboard end by means of a universal joint to one of the two axle shafts. Side gear 68 of the differential gearing 14 is splined at the right hand end of shaft 34 and the left hand end of shaft 34 is connected by means of a universal joint to a second axle shaft. Pinions 64 and 66 are supported on a pinion shaft, which in turn is secured to the carrier 60.

The speed of rotation of the inner race of the overrunning coupling 84 is equal to sun gear speed. The speed of rotation of the annular cylinder of clutch 88 does not equal the sun gear speed since it is effectively disconnected from the sun gear through overrunning coupling 84. The annular cylinder for the low third speed ratio and the fourth speed ratio clutch does not rotate at the speed of the sun gear 36, which may be equal to about 1.8 times the speed of sprocket 32.

Referring to Figures 6A and 6B, a microprocessor 110 receives an engine speed signal on lead 114 from an engine speed sensor 112. A throttle sensor 116 includes a variable resistance 122 powered by a reference voltage from a source of electrical power 118. The engine carburetor throttle 120 is moved by a throttle linkage in the usual fashion, and in doing so an adjustable contact for resistor 122 results in a throttle position signal on lead 124, which is connected to the input of the microprocessor. A transmission output shaft speed signal produced by speed sensor 126 is carried on lead 128 to the microprocessor.

A torque converter speed signal produced by turbine speed signal 130 is carried on lead 32 to the microprocessor.

A range position signal, which identifies the driving mode selected by the vehicle operator, is produced by a range sensor 134 and is carried on lead 136 to the microprocessor.

The signals produced by the various sensors are received by the microprocessor input gate and signal conditioning circuit 140. The gates act as switches for the sensors signals, and the signal conditioning circuit prepares the signals in digital form for processing by the microprocessor.

Output signals in digital form produced by the microprocessor pass through output gates and driver circuit 142, whose output signals represent values carried on electrical leads to an electro-hydraulic control circuit 144. The microprocessor output is connected to a throttle valve TV solenoid through lead 146, to a torque converter bypass clutch on lead 148 and to the forward clutch and solenoid control on lead 150.

Shift valve solenoid signals are carried to a 3-4 shift solenoid, a 2-3 shift solenoid and a sequence timing solenoid on leads 154, 156 and 158, respectively. Torque converter flow passages that are pressurized with fluid under control of the valve body are supplied through the hydraulic pressure lines 160, 162 and 166, the latter being a passage for pressure that controls the engagement force of a pressure operated torque converter bypass clutch. Pressure is distributed under the control of hydraulic valves in the control 144 to the forward clutch through passage 168. Similarly, the low and intermediate servo 96 for the transmission is applied with actuating pressure through passage 170 and the release side of the same servo is pressurized by pressure in passage 172. The intermediate clutch 90 is supplied with pressure in passage 174. The corresponding passages used for the direct clutch 88, the overdrive servo 94 and the reverse brake 92 are shown at 176, 178 and 180, respectively.

Essential elements of the microprocessor 110 include a program counter 182, which may function as a general register as in the case for the registers of the instruction register 184, but it also contains the addresses of instructions executed following entry or retrieval of an instruction or data currently being executed.

Core memory for the microprocessor, which contains read/write logic as well as decoder logic, is shown at 186. A memory address register usually is provided in a processor of this kind to store the currently addressed memory location, and this is indicated by reference number 188. Logic for the microprocessor is carried out at location 190 for the purpose of combining arithmetically and logically data words retrieved from registers or memory.

The instruction set or control algorithm, executed by the microprocessor using as input information received from the various sensors, is executed repetitively to produce, on the basis of the execution, output signals carried to the various actuators, servos and solenoids. The forward clutch 74 and reverse brake 92 are controlled and operated sequentially by the control algorithm when reverse drive is commanded. The control algorithm selectively produces output signals used to energize and deenergize solenoids in timed sequence such that the reverse clutch is energized, either directly by movement produced by the energized solenoid associated with the reverse clutch or indirectly by opening a source of hydraulic pressure through a hydraulic valve to a servo used to actuate the cam 100 of the reverse brake. The hydraulic valve may be opened and closed in response to an output signal used to energize and deenergize the solenoid associated with the reverse clutch 92.

When reverse drive is demanded by the vehicle operator, the reverse drive solenoid is energized, thereby moving cage 105 and engaging brake 92. Thereafter, following a suitable period of delay, line 150 carries an energizing signal to the forward clutch solenoid thereby engaging clutch 74. This timed relationship assures that brake 92 is engaged first and fully before torque is transmitted through the transmission. Then forward clutch 74 is engaged in a modulated manner by applying to line 150 a pulse-width-modulated signal that is adapted to avoid harsh impact as reverse gear is engaged.

In the example described, the reverse brake is normally engaged by spring 109 except when forward drive is commanded. Then, the reverse solenoid is energized. Alternately, the reverse brake and the actuation system can be arranged such that the brake is normally disengaged by the brake spring 109 in reverse drive conditions and is engaged by energizing the reverse brake solenoid when reverse drive is commanded.

## Claims

1. A multiple speed ratio automatic transmission for an automotive vehicle, comprising:
- a planetary gear system (12,14,56) having servo operated clutch and brake means (74,78,84,88,90,92,94,96) for controlling relative motions of the gear elements thereof to effect ratio changes, including a reverse drive in which a reverese brake means (92,Cl4) and a forward clutch means (74,Cl1) of said clutch and brake means are sequentially engaged,
characterised in that
- said first brake means being engaged in the reverse drive includes overrunning brake means (92,Cl4) comprising
- an inner race (101) supported rotatably and having an engageable surface;
- an outer race (100) supported for rotation coaxially with the inner race, having angularly spaced cam surfaces (103) facing the engageable surface of the inner race and being spaced therefrom by a variable radial distance;
- rollers (104) located between the cam surfaces(103) and the engageable surface, adapted to driveably engage said surfaces in one rotary direction and to disengage either the cam surfaces or the engageable surface in a second rotary direction opposite the first rotary direction;
- spring means (109) for urging the rollers (104) toward a position of engagement with or disengagement from the cam surfaces and the engageable surface, and permitting movement relative to the inner race (101) or the outer race (100) toward a position of engagement with or disengagement from said surfaces; and
- servo operated cage means (105) located between the cam surfaces (103) and the engageable surface, angularly displaceable relative to the inner race (101) and the outer race (100), and having abutting surfaces (106) thereon adjacent the rollers (104), whereby a forced contact between said abutting surfaces and the rollers forces the rollers to a disengaged position.

## Patentansprüche

1. Automatisches Mehrganggetriebe für ein Kraftfahrzeug, bestehend aus:
- einem Planetengetriebesystem (12, 14, 16, 56) mit servobetätigten Kupplungs- und Bremseinrichtungen (74, 78, 84, 88, 90, 92, 94, 96) für ein Steuern der relativen Bewegungen seiner Zahnradelemente zum Bewirken der Wechsel der Gänge, die einen Rückwärtsgang einschließen, bei welchem eine Rückwärts-Bremseinrichtung (92, Cl4) und eine Vorwärts-Kupplungseinrichtung (74, Cl1) der Kupplungs- und Brems-Einrichtungen aufeinanderfolgend betätigt werden,
dadurch gekennzeichnet, daß
- die in dem Rückwärtsgang betätigte erste Bremseinrichtung eine Überhol-Bremseinrichtung (92, Cl14) aufweist, bestehend aus
- einer Innenspur (101), die drehbar abgestützt ist und eine Eingriffsfläche hat;
- einer Außenspur (100), die für eine Drehung koaxial mit der Innenspur abgestützt ist und winkelmäßig beabstandete Nockenflächen (103) hat, die gegen die Eingriffsfläche der Innenspur ausgerichtet und von dieser durch einen veränderlichen Radialabstand beabstandet sind;
- Rollen (104), die zwischen den Nockenflächen (103) und der Eingriffsfläche angeordnet und für einen antriebsmäßigen Eingriff mit diesen Flächen in einer Drehrichtung und für ein Lösen entweder der Nockenflächen oder der Eingriffsfläche in einer zweiten Drehrichtung entgegengesetzt zu der ersten Drehrichtung angepaßt sind;
- Federmitteln (109) für eine Beeinflussung der Rollen (104) in Richtung einer Eingriffsposition mit oder einem Lösen von den Nockenflächen und der Eingriffsfläche und für die Ermöglichung einer Bewegung relativ zu der Innenspur (101) oder der Außenspur (100) in der Richtung einer Position des Eingriffs mit oder des Lösens von diesen Flächen; und
- servobetätigten Käfigmitteln (105), die zwischen den Nockenflächen (103) und der Eingriffsfläche angeordnet und winkelmäßig verschiebbar relativ zu der Innenspur (101) und der Außenspur (100) sind und die Stoßflächen (106) neben den Rollen (104) haben, wodurch eine forcierte Berührung zwischen diesen Stoßflächen und den Rollen die Rollen in eine gelöste Position forciert.

## Revendications

1. Transmission automatique à plusieurs vitesses pour un véhicule automobile, comprenant:
- un système d'engrenage planétaire (12, 14, 56) possédant des moyens d'embrayage et de freinage (74, 78, 84, 88, 90, 92, 94, 96) manoeuvrés par des servocommandes pour commander des mouvements relatifs d'éléments d'engrenage de ce système afin de produire des changements de vitesses, y compris une marche arrière, de ce système d'engrenage, dans lequel un moyen de freinage pour la marche arrière (92, C14) et un moyen d'embrayage pour la marche avant (74, Cl1) desdits moyens d'embrayage et de freinage sont serrés séquentiellement,
caractérisée en ce que
- ledit premier moyen de freinage, lequel est serré en marche arrière, comporte un moyen de freinage dit de dépassement (92, C14) comprenant
- une bague intérieure (101) supportée en rotation et présentant une surface de contact;
- une bague ou came extérieure (100) supportée en rotation, coaxialement à la bague intérieure, qui présente des surfaces de came ou rampes (103) mutuellement espacées angulairement, qui font face à la surface de contact de la bague intérieure et sont espacées de cette surface d'une distance radiale variable;
- des rouleaux (104) situés entre les rampes (103) et la surface de contact de la bague intérieure, rouleaux qui sont adaptés pour venir s'appliquer contre les rampes et la surface de contact et établir entre elles une liaison d'entraînement dans un sens de rotation, ainsi que pour s'écarter soit des rampes soit de la surface de contact dans un second sens de rotation opposé au premier;
- des moyens élastiques (109) pour charger les rouleaux (104) vers une position de contact avec les rampes et la surface de contact ou une position d'écartement d'elles et pour permettre un mouvement relatif des rouleaux, par rapport à la bague intérieure (101) ou de la bague extérieure (100), vers une position de contact avec lesdites surfaces ou une position d'écartement d'elles; et
- une cage (105) manoeuvrée par une servocommande et située entre les rampes (103) et la surface de contact, cage qui est déplaçable angulairement par rapport à la bague intérieure (101) et par rapport à la bague extérieure (100) et possède sur elle des surfaces de butée (106) voisines des rouleaux (104), l'agencement étant tel qu'un contact forcé entre ces surfaces de butée et les rouleaux amène les rouleaux par force à une position écartée ou débrayée.
